# EUROPEAN PATENT SPECIFICATION

(11) **EP 1 775 329 B1**
(45) Date of publication and mention of the grant of the patent: **20.04.2011**
(21) Application number: 05767154.7
(22) Date of filing: 27.07.2005
(51) Int. Cl.: C09D 183/04, C09D 201/02, C09D 5/02, C09D 179/02, C08K 3/22

(54) **ORGANIC-INORGANIC COMPOSITE COATING FILM AND AQUEOUS COATING COMPOSITION**
ORGANISCH-ANORGANISCHER LACKFILMVERBUND SOWIE WÄSSRIGE BESCHICHTUNGSZUSAMMENSETZUNG
FILM DE REVÊTEMENT COMPOSITE ORGANIQUE-INORGANIQUE ET COMPOSITION AQUEUSE POUR REVÊTEMENT

(30) Priority: 28.07.2004 JP 2004220007
(43) Date of publication of application: 18.04.2007
(73) Proprietor: DIC Corporation, Tokyo (JP); KAWAMURA INSTITUTE OF CHEMICAL RESEARCH, Sakura-shi Chiba 285-0078 (JP)
(72) Inventor: NAKAGUMA, Hirohide, 2850817 (JP); JIN, Ren-Hua, 1450063 (JP); LEE, Seungtaeg, 2850045 (JP)
(74) Representative: Albrecht, Thomas
(86) International application number: PCT/JP2005/013731
(87) International publication number: WO 2006/011512

(56) References cited:
- DE-A1- 19 829 455
- JP-A- 62 223 275
- JP-A- 2001 002 992
- JP-A- 2001 002 993
- JP-A- 2001 002 994
- JP-A- 2001 049 174
- JP-A- 2001 049 176
- JP-A- 2001 049 177
- JP-A- 2001 049 178
- JP-A- 2001 049 179
- JP-A- 2001 049 184
- JP-A- 2001 181 570
- JP-A- 2002 105 205

## Description

### TECHNICAL FIELD

The present invention relates to an organic-inorganic composite coating film having a fine pore pattern on the surface, and an aqueous coating composition used to produce the organic-inorganic composite coating film.

### BACKGROUND ART

An intense interest has been shown towards a coating film wherein a continuous phase is formed of an inorganic material such as a metal oxide by a sol-gel reaction, as a next generation coating material, because the coating film has high hardness and flame retardancy which cannot be achieved by a coating film wherein a continuous phase is formed of an organic material. In addition to these properties, such an inorganic coating film is excellent in solvent resistance, light resistance, weatherability and the like, and also can be provided with additional functions such as self-cleaning and antistatic properties. Therefore, its application is greatly anticipated.

As the inorganic coating film, metal oxide coating films formed by the sol-gel reaction have been widely studied. These metal oxide coating films are mostly organic-inorganic composite coating films wherein a polymer is hybridized in a matrix of an inorganic material, and are originated from the study of a biosilica. In a recent study of the biosilica, it has been discovered that the cell membrane of Bacillariaceae is basically composed of silica and an extremely precise pattern from nanoscale to micronscale is formed on the silica film. It has been reported that polyamines present in the living body are highly associated with derivation of the pattern (see M. Hildebrand, Progress in Organic Coatings, 2003, Vol. 47, p256-266). If such a precise pattern of the biosilica can be achieved in the inorganic coating film, it becomes possible to construct various devices such as biosensors. Therefore, the development of an inorganic material having a precise pattern has been explored and the study of spontaneous pattern formation without processing the inorganic material has been made.

For example, a silica block having numerous holes several hundred nanometers or more in diameter on its surface which is produced by using biomolecules isolated from a biosilica is disclosed (see N, Poulsen et al., Proc. Natl. Acad. Sic. USA, 2003, Vol. 100, p12075-12080). The silica block is not in the form of a coating film, the holes have different pore sizes, and the pattern is not controlled.

Also, a silica/polymer composite film having an irregular surface structure wherein silica is formed around an amine polymer fixed onto the surface of gold is disclosed. The composite film is obtained as follows. Molecules having polymerization initiation capability are fixed onto the surface of gold, polymerizable monomers having an amino group are polymerized to the molecules to form numerous amine polymers on the surface of gold in the form of a brush, and then, the composite film is obtained by conducting a hydrolysis condensation reaction of an alkoxysilane in the vicinity of the amine polymer brush (see Don Jin Kim et al., Langmuir, 2004, Vol. 20, p7904-7906). The surface of the composite coating film prepared by this method was not flat in structure, and had a fine-irregular structure of nanometer scale. However, the irregular structure was formed from the aggregation of silica particles and its surface shape was formed at random, and therefore, a precise pattern was never formed.

As described above, an organic-inorganic composite having a controlled pattern observed in a biosilica has never been achieved, and it has been long expected to achieve a material having such a controlled pattern on the surface of an inorganic material.

DE 198 29 455 A1 relates to a hydrophilising composition for coating surfaces which contains a water-soluble binder comprising hydroxy and/or carboxy groups, epoxy-functional metal oxide sol, dispersed pigment and a pigment stabiliser of the general structural formula

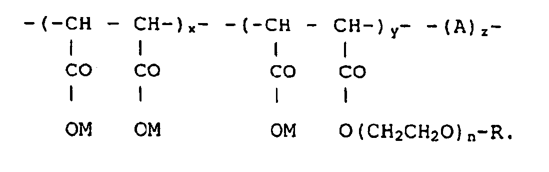

### DISCLOSURE OF THE INVENTION

### Problems to be Solved by the Present Invention

An object to be achieved by the present invention is to provide an organic-inorganic composite coating film wherein an organic material is combined in a matrix of an inorganic material, the organic-inorganic composite coating film having a controlled pattern on the surface.

### Means for Solving the Problems

In the present invention, the present inventors have found that a copolymer having a polyamine segment forms a stable sol-like aqueous coating composition with a metal alkoxide, which is converted into an inorganic oxide in an aqueous medium, and that when the aqueous coating composition is coated on the surface of a base material and then a volatile component is volatilized, a phase separation phenomenon of the copolymer and an inorganic oxide sol on the surface of the film causes patterning in the gel film forming process accompanying disappearance of the volatile component. Thus, the above object has been achieved.

Namely, an aspect of the present invention is to provide an organic-inorganic composite coating film wherein a copolymer having a polyamine segment is combined in a matrix composed of an inorganic oxide, the organic-inorganic composite coating film having a fine pore pattern on the surface.

Yet another aspect of the present invention is to provide the above-described organic-inorganic composite coating film, wherein the pore size of the fine pores is within a range of 20 nm to 5 µm.

Yet another aspect of the present invention is to provide the above-described organic-inorganic composite coating film, wherein the fine pore pattern is a periodic structural pattern of fme pores.

Yet another aspect of the present invention is to provide the above-described organic-inorganic composite coating film, wherein the fine pore pattern has a close packing shape or a honeycomb shape.

Yet another aspect of the present invention is to provide the above-described organic-inorganic composite coating film, wherein the inorganic oxide is an inorganic oxide obtained by a sol-gel reaction.

Yet another aspect of the present invention is to provide the above-described organic-inorganic composite coating film, wherein the inorganic oxide is a metal oxide of at least one kind of metal species selected from Si, Ti, Zr, Al, and Zn.

Yet another aspect of the present invention is to provide the above-described organic-inorganic composite coating film, wherein the polyamine segment is at least one kind of a polymer segment selected from polyalkyleneimine, polyvinylamine, polyallylamine, polyvinylpyridine, polyaminoalkyl methacrylate, polyaminoalkyl acrylate, polyaminalkyl acrylamide, polyaminoalkyl methacrylamide, and polyaminoalkyl styrene.

Another aspect of the present invention is to provide the above-described organic-inorganic composite coating film, wherein the content of the polyamine segment in the copolymer is within a range of 2 to 70% by mass.

Yet another aspect of the present invention is to provide the above-described organic-inorganic composite coating film, wherein the copolymer is a copolymer having a hydrophobic segment.

Yet another aspect of the present invention provides the above-described organic-inorganic composite coating film, wherein the hydrophobic segment is at least one kind of a polymer segment selected from polystyrene, polyacrylate, polymethacrylate, and epoxy resin.

Yet another aspect of the present invention is to provide the above-described organic-inorganic composite coating film, wherein the copolymer is a copolymer which forms an association in an aqueous medium.

Yet another aspect of the present invention is to provide the above-described organic-inorganic composite coating film, wherein the copolymer having a polyamine segment is a copolymer in which the polyamine segment is grafted to polymer particles.

Yet another aspect of the present invention is to provide the above-described organic-inorganic composite coating film, wherein the content of the inorganic oxide is within a range of 40 to 95% by mass.

Still another aspect of the present invention is to provide an organic-inorganic composite coating film, which is formed by coating an aqueous sol-like coating composition prepared by mixing a copolymer having a polyamine segment, a metal alkoxide, and an aqueous medium on a base material, and by volatilizing a volatile component.

Still another aspect of the present invention is to provide an aqueous coating composition, including a copolymer having a polyamine segment, a metal alkoxide, and an aqueous medium.

Yet another aspect of the present invention is to provide the above-described aqueous coating composition, wherein the polyamine segment is at least one kind of a polyamine segment selected from polyalkyleneimine, polyvinylamine, polyallylamine, polyvinylpyridine, polyaminoalkyl methacrylate, polyaminoalkyl acrylate, polyaminoalkyl acrylamide, polyaminoalkyl methacrylamide, and polyaminoalkyl styrene.

Yet another aspect of the present invention is to provide the above-described aqueous coating composition, wherein the content of the polyamine segment in the copolymer is within a range of 2 to 70% by mass.

Yet another aspect of the present invention is to provide the above-described aqueous coating composition, wherein the copolymer is a copolymer having a hydrophobic segment.

Yet another aspect of the present invention is to provide the above-described aqueous coating composition, wherein the hydrophobic segment is at least one kind of a polymer segment selected from polystyrene, polyacrylate, polymethacrylate, and epoxy resin.

Yet another aspect of the present invention is to provide the above-described aqueous coating composition, wherein the copolymer is a copolymer which forms an association in an aqueous medium.

Yet another aspect of the present invention is to provide the above-described aqueous coating composition, wherein the metal alkoxide is a alkoxysilane or an alkylalkoxysilane having a reactive group.

Yet another aspect of the present invention is to provide the above-described aqueous coating composition, wherein the ratio of the copolymer to the metal alkoxide is within a range of 60/40 to 5/95 in terms of a mass ratio represented by (copolymer)/(metal alkoxide).

### Effects of the Invention

The organic-inorganic composite coating film of the present invention has a matrix of an inorganic oxide, and therefore has properties such as high hardness, flame retardancy, and semiconductivity, and also has various properties of a copolymer combined therein and has a fine pore pattern on the surface of the coating film. Such an organic-inorganic composite coating film can be expected to be applied to the field of various advanced materials, for example, devices wherein a electrically conductive metal line is provided on the surface of a pattern, structural color materials, biosensors, fixation of biomolecules and catalysts, dye-sensitized solar batteries, luminescent materials due to optical interference, and construction of superhydrophobic or superhydrophilic coating film.

### BRIEF DESCRIPTION OF THE DRAWINGS

Fig. 1 is an AFM image (3 µm × 3 µm) of the surface of a coating film obtained in Example 1.
Fig. 2 is an AFM image (14 µm × 14 µm) of the surface of a coating film obtained in Example 1.
Fig. 3 is a scanning electron microscope image (scale bar: 3.22 µm) of the surface of a coating film obtained in Example 2.
Fig. 4 is an AFM image (5 µm × 5 µm) of the surface of a coating film obtained in Example 3.
Fig. 5 is an AFM image (5 µm × 5 µm) of the surface of a coating film obtained in Example 4.
Fig. 6 is an AFM image (1 µm × 1 µm) of the surface of a coating film obtained in Comparative Example 1.

### BEST MODE FOR CARRYING OUT THE INVENTION

The organic-inorganic composite coating film of the present invention is an organic-inorganic composite coating film, wherein a copolymer having a polyamine segment within a range of 2 to 70% by mass in the copolymer is combined in a matrix composed of an inorganic oxide obtained by a sol-gel reaction, the organic-inorganic composite coating film has a periodic structural pattern of fine pores which pore size is within a range of 20 nm to 5 µm on the surface, and the content of the inorganic oxide in the organic-inorganic composite coating film is within a range of 60 to 90% by mass.

### [Inorganic oxide]

The organic-inorganic composite coating film of the present invention has a matrix composed of an inorganic oxide. As used herein, the matrix composed of an inorganic oxide means a structure wherein a continuous phase of the inorganic oxide is constructed in the entire coating film.

The inorganic oxide obtained by the sol-gel reaction of a metal alkoxide is used because it is easy to form a coating film. As the metal alkoxide, a metal alkoxide having a valence of three or higher capable of forming a network of the inorganic oxide by hydrolysis can be preferably used. Examples of metal species of the metal alkoxide include Si, Ti, Zr, Al, B, Ge, Zn, or the like. Among these metal species, Si, Ti, Zr, Al, and Zn are preferable.

A metal alkoxide having Si as a metal species can be preferably used in particular because it is easily handled and is easily available. As the metal alkoxide having Si as the metal species, alkoxysilanes, alkylalkoxysilanes having a reactive group or the like can be preferably used. As used herein, alkoxysilanes and alkoxysilanes having a reactive group include oligomers thereof.

Examples of the alkoxysilane include tetraalkoxysilanes such as tetramethoxysilane, tetraethoxysilane, tetra(2-ethanol)orthosilicate, tetra(n-propoxy)silane, and tetra(isopropoxy)silane; and trialkoxysilanes such as methyltrimethoxysilane, ethyltrimethoxysilane, propyltrimethoxysilane, phenyltrimethoxysilane, γ-glycidoxypropyltrimethoxysilane, γ-methacryloylpropyltrimethoxysilane, γ-(2-aminoethyl)aminopropyltrimethoxysilane, methyltriethoxysilane, and phenyltriethoxysilane.

Examples of the alkylalkoxysilane having a reactive group include silanes having a halogen, and examples of the silanes having a halogen include chlorosilanes such as tetrachlorosilane and methyltrichlorosilane.

The above-described silanes may be preliminarily oligomerized by partial hydrolysis, and the oligomerized silanes possessing silanol-sites may be used in the form of a silica sol. As the oligomerized alkoxysilane or alkylalkoxysilane having a reactive group, those having an average polymerization degree of about 2 to 20 can be preferably used. In this case, various known acids and alkalis can be used as a hydrolysis catalyst.

In addition, the above-described silanes may be used in combination with a divalent alkoxysilane of dialkoxysilanes, such as dimethyldimethoxysilane, diethyldimethoxysilane, methylethyldimethoxysilane, diphenyldimethoxysilane, and phenylmethyldimethoxysilane.

As the alkoxide of the other metal species, for example, alkoxytitaniums such as tetraisopropoxytitanium, tetraethoxytitanium, tetrabutoxytitanium, and tetrapropoxytitanium; or alkoxyaluminums such as triethoxyaluminum can be used.

These metal alkoxides may be used alone or in combination. When the alkoxysilane is used in combination with dialkoxysilanes, alkoxytitaniums or alkoxyaluminums, it is preferable that the content of dialkoxysilanes, alkoxytitaniums, and alkoxyaluminums be less than 10% by weight.

It is preferable to use a metal alkoxide having numerous functional groups, particularly a metal alkoxide having a valence of four or higher such as tetraalkoxysilane, because hardness of the resulting coating film can be increased. For the purpose of increasing the hardness of the coating film, when a metal alkoxide having numerous functional groups is used, the content of the metal alkoxide having a valence of four or higher in the entire metal alkoxide is preferably 30% by mass or more, and more preferably 50% by mass or more.

### [Copolymer having Polyamine Segment]

In the organic-inorganic composite of the present invention, a copolymer having a polyamine segment is used as an organic material. A stable sol-like aqueous coating composition can be provided by mixing the copolymer having a polyamine segment with a metal alkoxide in an aqueous medium. When an aqueous coating composition containing the copolymer is coated on the surface of a base material and volatile component therein is removed, the copolymer causes a phase separation phenomenon with an inorganic oxide sol to occur in the process of forming a gel film accompanying disappearance of the volatile component. It is considered that the occurrence of this phase separation phenomenon results in the formation of a pattern on the surface of the film.

As the polyamine segment, it is possible to use polyamine segments, for example, a polyalkyleneimine such as polyethyleneimine and polypropyleneimine; polyaminoalkyl methacrylate such as poly(N,N-dimethylaminoethyl acrylate) and poly(N,N-dimethylaminopropyl acrylate); polyaminoalkyl methacrylate such as poly(N,N-dimethylaminoethyl methacrylate) and poly(N,N-dimethylaminopropyl methacrylate); polyaminoalkyl acrylamide such as poly(N,N-dimethylaminoethyl acrylamide) and poly(N,N-dimethylaminopropyl acrylamide); polyaminoalkyl methacrylamide such as poly(N,N-dimethylaminoethyl methacrylamide) and poly(N,N-dimethylaminopropyl methacrylamide); polyaminoalkyl styrene such as polydimethylaminomethyl styrene and polydimethylaminoethyl styrene; polyvinylamine, polyallylamine, or polyvinylpyridine

Among these polyamine segments, polyalkyleneimine, polyvinylamine, polyallylamine, polyvinylpyridine, poly(dimethylaminoalkyl methacrylate), poly(dimethylaminoalkyl acrylate), and polyaminoalkyl styrene can be preferably used so as to stabilize the silica sol and to improve the strength of a coating film.

The content of the polyamine segment in the copolymer is within a range from 2 to 70% by mass.

It is preferable that the copolymer having a polyamine segment have the other polymer segment having affinity with water, which is different from that of the polyamine segment, because an association is easily formed in an aqueous medium. As used herein, the association means a micelle- or emulsion-like aggregates in which copolymers having two or more kinds of polymer segments having a different affinity with water are associated with each other in an aqueous medium. As for the polymerization form, for example, a graft copolymer, a block copolymer or the like can be preferably used. Also, the copolymer may be linear, branched, comb-shaped, or star-shaped. Particularly, the block or graft copolymer is preferable because the properties of each structural unit are easily reflected, and the stability of the silica sol in water and the tenacity of the obtained coating film are easily obtained. Also, a copolymer wherein the other polymer segments are in the form of particles and polyamine segments are grafted around the core of the particles can be preferably used.

It is preferable that the other polymer segment be a hydrophobic segment composed of a hydrophobic polymer because it becomes much easier to form an association in an aqueous medium. As the hydrophobic segment, for example, polymers such as polystyrene, epoxy resin, or a polymer such as polyacrylate including a hydrophobic acrylate unit, and polymethacrylate including a hydrophobic methacrylate unit can be used. Among these polymers, polystyrene, polyacrylate, polymethacrylate, and epoxy resin can be preferably used. The other polymer segments in the copolymer may be used alone or in combination of two or more kinds.

When the copolymer has a hydrophobic segment, the content of the hydrophobic segment in the copolymer is preferably within a range of 30 to 70% by mass, and more preferably 30 to 50% by mass.

It is also preferable that the other polymer segment be a nonionic hydrophilic segment composed of a nonionic hydrophilic polymer. When the other polymer segment is the nonionic hydrophilic segment, an association can be satisfactorily formed in an aqueous medium, and an aqueous coating composition containing a copolymer having the segment is excellent in film forming properties upon formation of a coating film.

Examples of the nonionic hydrophilic segment include polymer segments including those which are hydrophilic, for example, polyalkylene oxide such as polyethylene oxide; hydrophilic polyacrylate such as polydihydroxypropyl acrylate; hydrophilic polymethacrylate such as polydihydroxypropyl methacrylate; polyhydroxyethylene; polyvinyl ether such as polymethyl vinyl ether or polyethyl vinyl ether; poly(N-alkylacrylamide) such as poly(N-methylacrylamide) or poly(N-ethylacrylamide); and poly(N-acylethyleneimine) such as poly(N-acetylethyleneimine) or poly(N-propionylethyleneimine).

The molecular weight of the copolymer is preferably within a range of 500 to 500,000. Taking into account the control of the pattern shape on the surface of an inorganic composite film, the molecular weight is more preferably within a range of 1,000 to 100,000, and still more preferably 5,000 to 75,000.

### [Organic-Inorganic Composite Coating Film]

The organic-inorganic composite coating film of the present invention has a fine pore pattern on the surface. As used herein, the fine pore pattern means a structure wherein fine holes having a uniform size are formed over the entire surface of the coating film. More specifically, the organic-inorganic composite coating film of the present invention is a film formed with a composite wherein the copolymer is combined in a matrix formed as one body with a continuous layer of an inorganic oxide such that the film has a fixed height as a base, and also has holes having a fixed shape and a fixed size on the surface. Such an organic-inorganic composite coating film of the present invention is clearly distinguished from a film having a random irregular surface structure in which the above-mentioned surface representing a base height is never present. The film having a random irregular surface structure is formed in a process wherein an inorganic oxide is aggregated into base units in the form of particles.

The pore size of the fine pore pattern can be controlled according to the kind or structure of the organic material to be used and is within a range of 20 nm to 5 µm, and more preferably 20 nm to 1 µm. When the pore size is within the above range, various properties are exhibited such as color developability according to a fine pore pattern, immobilization of catalyst, biomolecules and DNA according to an increase in the surface area, and superhydrophilicity/superhydrophobicity. It is preferable that the pore size of the fine pore pattern on the film surface be uniform over the entire surface so as to exhibit these properties.

The depth of the pores of the fine pore pattern can be controlled, according to demands, by the morphology and size of the association resulting from the structure of the copolymer incorporated therein, and can be adjusted within a range of 20 nm to 1 µm. The thickness can also be properly adjusted according to use.

When the fine pore pattern has a periodic structure in particular, it is possible to exhibit a structural color. The periodic structure is a two-dimensionally arranged structure wherein fine pore patterns having a fixed pore size and a fixed depth are arranged at fixed intervals. The periodic structure of the fine pore pattern can be controlled by the above-described structure or content of the copolymer and the like, and, according to demands, its periodicity can be properly adjusted from a close packing-shaped or honeycomb-shaped structure, wherein the fine pore patterns are very close to one another, to a structure wherein the center-distance between adjacent fine pore patterns is about 1 to 10 times larger than the pore size of the fine pore pattern. The fine pore pattern having a close packing-shaped or honeycomb-shaped structure is particularly preferable because a uniform periodic structure can be formed in the entire coating film.

The content of the inorganic material in the organic-inorganic composite coating film is 60 to 90% by mass. When the content of the inorganic material is within the above range, a uniform matrix of the inorganic material can be formed in the entire coating film and also cracking of the coating film is less likely to occur.

### [Aqueous Coating Composition]

The organic-inorganic composite coating film of the present invention can be easily produced by using an aqueous coating composition prepared by mixing a copolymer having a polyamine segment, a metal alkoxide, and an aqueous medium.

Regarding the formation of the fine pore pattern on the surface of the organic-inorganic composite coating film of the present invention, its detailed mechanism has not been elucidated, but the following basic model is assumed. The copolymer having a polyamine segment used in the present invention can be converted into a stable sol-like aqueous coating composition by mixing with a metal alkoxide in an aqueous medium. The polyamine segment in the copolymer also functions as a catalyst which accelerates gelation of the metal alkoxide. It is considered that, when the aqueous coating composition containing the copolymer is coated on the surface of a base material, a polymer-rich portion composed of the copolymer and a sol liquid of the metal alkoxide and a polymer-poor portion form a kind of phase separation state at a boundary surface between the liquid surface of the liquid coated thereon and air due to the vaporization of a volatile component. According to this phase separation combined with a convection phenomenon accompanying volatilization of the solvent, the polymer-rich portion and the polymer-poor portion are regularly arranged on the surface of the coating liquid. In this case, since the polymer-rich portion and the polymer-poor portion differ in the state of volatilization of the solvent, a surface pattern due to the regular arrangement caused from the phase separation is formed. This pattern-forming process occurs with formation of a coating film due to gelation of the metal alkoxide over the entire surface of the film, so that the organic-inorganic composite coating film of the present invention is formed. For example, in the state where a structure such as polymer micelle having a polyamine on its surface is retained in the polymer-rich portion and vaporization of the solvent is accelerated in the polymer-poor portion, hollows are formed in the local portion of the polymer-poor portion due to the vaporization of the volatile liquid, and this results in the formation of pores. According to the structure of the copolymer to be used or the like, another pore formation model can be considered. In any case, it can be considered that the phase separation phenomenon in a coating solution caused by the copolymer having a polyamine segment is closely associated with the formation of a pattern.

After coating the aqueous coating composition on a base material, an inorganic oxide is formed by volatilizing the volatile component as the volatile component disappears. During this time, the copolymer having a polyamine segment forms a hybrid phase with a metal oxide and the entire gelation simultaneously proceeds while the phase separation with a continuous phase of the inorganic oxide occurs. During this process, an interfacial dissipative structure is formed, and the organic-inorganic composite of the present invention is produced in this way.

The aqueous coating composition essentially includes at least a copolymer capable of forming an association in an aqueous medium, a metal alkoxide, and an aqueous medium which are mixed with each other. The above-described copolymer and metal alkoxide can be preferably used as the copolymer and the metal alkoxide incorporated therein.

The copolymer having a polyamine segment in the aqueous coating composition is the same copolymer as that described above. Since the effect of stabilizing a silica sol can be obtained when the amino group is protonated in the aqueous coating composition, it is preferable that the amino groups in the copolymer be partially or completely protonated. In order to protonate the amino groups in the copolymer, a copolymer having a free amino group may be acid-treated in water, or it may be also possible to use a copolymer having an amino group which forms a salt in advance. When a hydrolysable metal alkoxide is used, a copolymer having an amino group, which is protonated or not protonated with acids, can work as a catalyst for the hydrolysis reaction of the metal alkoxide in water.

The aqueous medium used in the aqueous coating composition refers to water or a mixed solvent of water and a water-soluble solvent. As the water-soluble solvent, it is possible to use solvents, for example, alcohols such as methanol, ethanol, and isopropanol; ketones such as acetone; pyridine, and dimethylformamide. When the mixed solvent of water and a water-soluble solvent is used, the amount of the water-soluble solvent is preferably less than 10% by mass with respect to the amount of water to be used.

Although the mixing order is not specifically limited, it is preferable that the metal alkoxide be added after dissolving the above-described copolymer in the aqueous medium because dispersibility of the metal alkoxide in a sol state is excellent.

A ratio of the mass (X) of the copolymer to the mass (Y) of the metal alkoxide, (X)/(Y), is properly adjusted within a range of about 60/40 to 5/95, preferably 40/60 to 15/85, and more preferably 35/65 to 25/75. When the ratio (X)/(Y) is 5/95 or less, cracking of the resulting coating film can be reduced. On the other hand, when the ratio is 60/40 or more, water resistance of the coating film can be improved.

The amount of the aqueous medium used therein is preferably from 0.2 to 50 times larger than that of the metal alkoxide incorporated therein.

To the aqueous coating composition, various known solvents such as ethyl cellosolve, propylene glycol monobutyl ether, propylene glycol dibutyl ether, and diethylene glycol monopropyl ether can be added as long as the effects of the present invention are not adversely affected. Also, various known additives such as lubricating agents and wetting agents can be added.

In the present invention, various known curing agents such as water-soluble polyglycidyl ether can be also added as long as the effects of the present invention are not adversely affected.

After the above-described aqueous coating composition is coated on various base materials made of glass, metal, lumber, plastic or the like, the organic-inorganic composite coating film can be easily formed by curing the aqueous coating composition.

The method of coating onto the base material is not specifically limited and it is possible to use various conventionally known methods such as a brush coating method, dip coating method, spray coating method, roll coating method, bar coating method, and air knife coating method. These can be used alone or in combination.

A cured coating film can be easily obtained by coating the aqueous coating composition of the present invention on various base materials, followed by an alkali treatment or a heat treatment. In addition, both of the alkali treatment and the heat treatment can also be used in combination.

Examples of the alkali treatment include a method of directly spraying an alkali compound and a method of aging in a gas containing an alkali compound. Examples of the alkali compound which can be used herein include triethylamine, trimethylamine, diethylamine, dimethylamine, methylamine, ethylamine, propylamine, diethylethanolamine, aminopropanol, and ammonia.

Among these alkali compounds, ammonia can be preferably used. For example, an organic-inorganic composite coating film can be obtained by aging the above-described coating film in an atmosphere of an ammonia gas volatilized from an aqueous ammonia solution without being exposed to high temperature.

When the coating film is cured by heating, the heating temperature may be a low temperature within a range of about 60 to 120°C. The coating film is preferably cured by treating at about 100°C for 30 minutes. When the metal alkoxide contains epoxysilanes, the epoxy group and polyamines are reacted by heating and the tenacity of the coating film increases, and therefore it is preferable that the coating film be cured by heating in this case.

### EXAMPLES

The present invention will now be descried in more detail by way of the following example and reference examples. Unless otherwise specified, percentages are by mass.

### (Synthesis Example 1)

### <Preparation of copolymer (X-1)>

To a 100-ml flask filled with nitrogen, 15 g of a hydroxyl group-terminated polyethylene oxide (manufactured by Aldrich Co., number average molecular weight: 2,000), 25 g of chloroform and 6 g of pyridine were added, followed by stirring. After they were dissolved, a solution prepared by mixing 7.15 g of tosyl chloride with 25 g of chloroform was added over 30 minutes while ice-cooling a reaction vessel. After the addition, stirring was further conducted at 40°C for four hours, and 50 g of chloroform was added thereto. The resulting solution was washed in turn with 100 ml of an aqueous 5% HCl solution, 100 ml of an aqueous saturated sodium hydrogen carbonate solution, and 100 ml of an aqueous saturated sodium chloride solution and then dried. Furthermore, the resulting powder was washed with hexane and then vacuum dried to obtain 12 g of a precursor polymer (P-1) wherein the end of the polyethylene oxide is tosylated.

In a nitrogen atmosphere, 3.5 g of the precursor polymer (P-1), 3.8 g of 2-methyl-2-oxazoline, and 30 ml of N,N-dimethylformamide were added to the reaction vessel, followed by stirring at 100°C for eight hours. By this reaction, an oxazoline chain was block-polymerized at the end of the precursor polymer (P-1). After cooling to room temperature, the reaction solution was added dropwise to 300 ml of a solution prepared by mixing equal amounts of hexane and ethyl acetate to produce a precipitate. The resulting solution was filtered, the precipitate was washed with 100 ml of a liquid mixture prepared by mixing equal amounts of hexane and ethyl acetate, and then dried to obtain 4.8 g of a block intermediate polymer (I-1) having a polyethylene oxide chain and a poly(N-acylethyleneimine) chain.

To the intermediate polymer (I-1), 11.2 g of an aqueous 18% hydrochloric acid solution was added and stirred at 90°C for six hours, and N-acylethyleneimine in the intermediate polymer was acid-hydrolysed to obtain ethyleneimine hydrochlorate. After cooling to room temperature, 200 ml of acetone was added to the reaction solution, thereby precipitating a product, followed by filtration. The product was washed with a small amount of acetone and then dried to obtain 3.7 g of a copolymer (X-2). In the ¹H-NMR measurement of the copolymer (X-2), a peak of an acyl group derived from N-acylethyleneimine was not observed, and it was therefore revealed that the entire N-acylethyleneimine was converted into ethyleneimine hydrochlorate. Consequently, this means that the copolymer (X-2) was in the form of a block copolymer of polyethyleneimine hydrochlorate and polyethylene oxide.

### (Synthesis Example 2)

### <Preparation of copolymer (X-2)>

After the atmosphere in a 50-ml reaction vessel was substituted with a nitrogen gas, 0.147 g (0.79 mmol) of methane toluenesulfonate as a cation ring-opening living polymerization initiator and 5 ml of N,N-dimethylacetamide were added thereto, followed by stirring at room temperature. To this solution, 2.01 g (23.6 mmol) of 2-methyl-2-oxazoline was added and 2-methyl-2-oxazoline was subjected to cation ring-opening living polymerization while stirring at 100°C for twenty-four hours. The polymerization degree was 98%.

After lowering the temperature of the reaction solution to 60°C, 2.3 g (23.6 mmol) of 2-ethyl-2-oxazoline was added, followed by heating to 100°C and further stirring for twenty-four hours. The temperature of the mixed reaction solution was cooled to room temperature and 5 ml of methanol was added, and then the mixed reaction solution was concentrated under reduced pressure. The concentrated solution was poured into 100 ml of diethyl ether, thereby precipitating a polymerized product. A methanol solution of the obtianed polymerized product was poured into diethyl ether, thereby causing precipitation again. After suction filtration, the remaining product was vacuum dried to obtain 1.9 g of a block intermediate polymer (1-2). The yield was 43%.

The molecular weight of the resulting intermediate polymer (1-2) was measured. As a result, the number average molecular weight was 4,000 and molecular weight distribution was 1.15. ¹H-NMR (δ_{TMS} = 0, D₂O) measurement revealed a signal (CH₃:1.97 ppm) of a side chain methyl group in an acetylethyleneimine block, a signal (CH₃: 1.13 ppm, CH₂: 2.41 ppm) derived from a side chain ethyl group in a propionylethyleneimine block, and a signal (CH₂ CH₂ : 3.46 ppm) derived from a main chain ethylene of both blocks. As is apparent from an integral ratio based on the ¹H-NMR measurement of both units, a molar composition ratio of the acetylethyleneimine block to the propionylethyleneimine block is 36:44.

To 1.0 g of the block intermediate polymer (I-2), 34.7 ml of potassium hydroxide (5 mol/l) was added, and then, a precipitate was formed therein. This mixture was heated to 95°C and after stirring for sixty hours, the reaction solution was extracted with 15 ml of methanol. After extracting again with 20 ml of chloroform, the resulting polymer was dried to obtain 0.6 g of a copolymer (X-4).

¹H-NMR (CDCl₃) measurement of the copolymer (X-4) revealed that a molar composition ratio of an ethyleneimine unit in the molecular chain derived from an acetylethyleneimine block to an acetylethyleneimine unit was about 86:14. Also, a molar composition ratio of a propionylethyleneimine block unit derived from a propionylethyleneimine block to an ethyleneimine unit was about 77:23. As is apparent from the results, the copolymer (X-4) is in the form of a block copolymer having an ethyleneimine unit-rich block and a propionylethyleneimine unit-rich block.

### (Synthesis Example 3)

### <Preparation of copolymer (X-3)>

A mixture containing 9.8 g (50 m eq., epoxy eq.: 196 g) of tetrakis(glycidyloxyallyl)ethane manufactured by Japan Epoxy Resins Co., Ltd. (JER) under the trade name of "EPIKOTE 1031 S", 11.9 g (70 mmol) of 4-phenylphenol, 0.21 ml (0.1 mol%) of a solution of 65% ethyltriphenylphosphonium acetate in ethanol and 40 ml of N,N-dimethylacetamide was reacted in a nitrogen atmosphere at 160°C for four hours. After air cooling, the reaction solution was added dropwise to 100 ml of water and the resulting precipitate was washed twice with methanol and then dried under reduced pressure at 70°C to obtain a modified epoxy compound (EP-1) having a hydroxy group in a biphenylene type side chain. The amount of the obtained product was 17.6 g, and the yield was 96%.

The results of ¹H-NMR (manufactured by JEOL Ltd., AL300, 300 MHz) measurement of the modified epoxy compound (EP-1) are shown below.
Results of ¹H-NMR (CDCl₃) measurement:
δ (ppm): 7.53-7.25 (m), 7.13-6.60 (m), 4.50-3.75 (m)

A chloroform (30 ml) solution containing 14.3 g (75 mmol) of p-toluenesulfonic acid chloride was added dropwise to a solution of 9.15 g (25 m eq.) of the modified epoxy compound (EP-1) as synthesized above, 20 g (250 mmol) of pyridine and 30 ml of chloroform in a nitrogen atmosphere while stirring with ice cooling for 30 minutes. After the completion of the dropwise addition, the solution was further stirred at a bath temperature of 40°C for four hours. After the completion of the reaction, the reaction solution was diluted by adding 60 ml of chloroform. Subsequently, the reaction solution was washed in turn with 100 ml of a 5% hydrochloric acid aqueous solution, a saturated sodium hydrogen carbonate aqueous solution, and a saturated saline aqueous solution, dried over magnesium sulfate, filtered and then concentrated under reduced pressure. The resulting solid was washed several times with methanol, filtered and then dried under reduced pressure at 70°C to obtain a modified epoxy compound (EP-2). The amount was 13 g, and the yield was 98%.

The results of ¹H-NMR (manufactured by JEOL Ltd., AL300, 300 MHz) measurement of the modified epoxy compound (EP-2) are shown below.
Results of ¹H-NMR (CDCl₃) measurement:
δ (ppm): 7.94-7.74 (m), 7.55-6.30 (m), 4.40-3.80 (m), 2.40-2.34 (m)

1.04 g (2 m eq.) of a modified epoxy compound (EP-2), 8.5 g (100 mmol) of 2-methyloxazoline and 40 ml of N,N-dimethylacetamide were stirred in a nitrogen atmosphere at 100°C for twenty-four hours. To the resulting reaction mixture, 300 ml of ethyl acetate was added and, after vigorously stirring at room temperature, a solid of the product was obtained by way of filtering, washing twice with ethyl acetate and then drying under reduced pressure to produce 9.4 g of a modified epoxy compound (EP-3). The yield upon polymerization was 99%. ¹H-NMR analysis revealed that the resulting modified epoxy compound (EP-3) had a tetrakisphenylethane structure as a main chain (δ: 6.45 to 7.90 ppm) and poly(N-acetylethyleneimine) as a side chain [ethylene hydrogen (δ: 3.47 ppm), and acetyl hydrogen (δ: 2.00 ppm)]. The quantitative calculation of the reactants and the product revealed that it was a poly(N-acetylethyleneimine) star-shaped polymer having a number average polymerization degree of 20.

5.6 g of the modified epoxy compound (EP-3) obtained above was stirred into 24.2 g of an aqueous 5 N hydrochloric acid solution at 90°C for six hours, thereby conducting the hydrolysis reaction. After air cooling, the mixed reaction solution containing a white precipitate produced with time was added to about 150 ml of acetone, followed by stirring at room temperature for about 30 minutes. A solid of the product was obtained by filterating, and the product was washed twice with acetone and then dried under reduced pressure to obtain 4.4 g of a copolymer (X-3). The yield was 99%. ¹H-NMR analysis revealed that the copolymer (X-3) had no side chain of acetyl group [acetyl hydrogen (δ: 2.00 ppm)] due to the hydrolysis reaction. It was recognized that the resulting solid was a star-shaped polymer having polyethyleneimine hydrochlorate as a side chain.

### (Synthesis Example 4)

### <Preparation of core-shell particle dispersion solution (X-4)>

4 g of polyethyleneimine (manufactured by Aldrich Co., Mn: 60,000, 50 wt% aqueous solution) was dissolved in 188 ml of water and 2 N hydrochloric acid was added, thereby adjusting the pH to 7, and 8 g of styrene was added thereto, followed by stirring in a nitrogen stream for thirty minutes. Then, 2 ml of t-butyl hydroperoxide (manufactured by Aldrich Co., 70 wt% aqueous solution) was added thereto, followed by stirring at 80°C for two hours (300 rpm) to obtain a 5 wt% dispersion solution of core-shell type fine particles having a core of polystyrene and a shell layer of polyethyleneimine. The average particle size of fine particles, measured at 25°C using a particle size measuring apparatus "FPAR-1000" manufactured by Otsuka Electronics Co., Ltd., was 120 nm. This core-shell dispersion solution was concentrated under reduced pressure to 10 wt% and an aqueous hydrogen chloride solution (5 mol/l) was added, thereby adjusting the pH to 2 to obtain a core-shell particle dispersion solution (X-4).

### (Example 1)

### <Preparation of Aqueous Composition (1)>

0.05 g of the copolymer (X-1) obtained in Synthesis Example 1 and 0.04 g of polyvinyl alcohol (manufactured by Wako Pure Chemicals Industries, Ltd., average polymerization degree: 500, complete saponification type) were dissolved in 0.91 ml of pure water. To the solution, 0.26 g of tetramethoxysilane was added while stirring. In an initial stage, tetramethoxysilane was dispersed in the form of an emulsion. After several minutes, a transparent homogeneous solution was obtained. This solution was allowed to stand for one hour to obtain an aqueous composition (1).

### <Formation of Coating Film (1)>

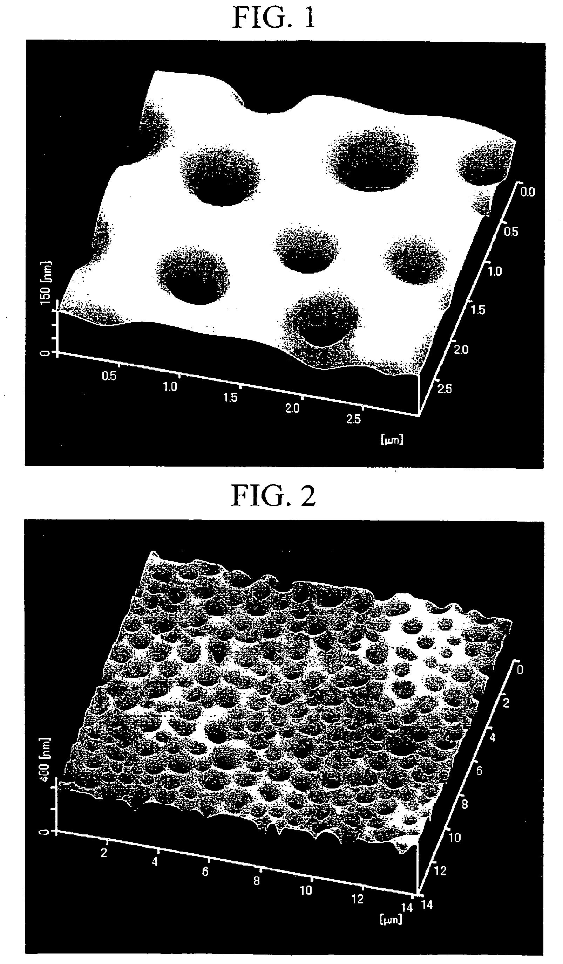

The resulting aqueous composition (1) was coated on a slide glass using a 3 mil applicator and then dried at 80°C for thirty minutes to obtain a colorless and transparent coating film (1) having a thickness of about 2 µm and high hardness. The surface of the resulting coating film (1) was analyzed by AFM. The results are shown in Figs. 1 to 2. On the surface of the coating film (1), a fine pore pattern having an average pore size of about 0.68 µm and an average depth of about 160 nm was confirmed.

### (Example 2)

### <Preparation of Aqueous Composition (2)>

0.03 g of the copolymer (X-2) obtained in Synthesis Example 2 was dissolved in 0.19 ml of pure water and then 0.04 ml of hydrochloric acid (5 mol/1) was added. To the solution, 0.076 g of tetramethoxysilane was added while stirring. In an initial stage, tetramethoxysilane was dispersed in the form of an emulsion. After several minutes, a transparent homogeneous solution was obtained. This solution was allowed to stand for one hour to obtain an aqueous composition (2).

### <Formation of Coating Film (2)>

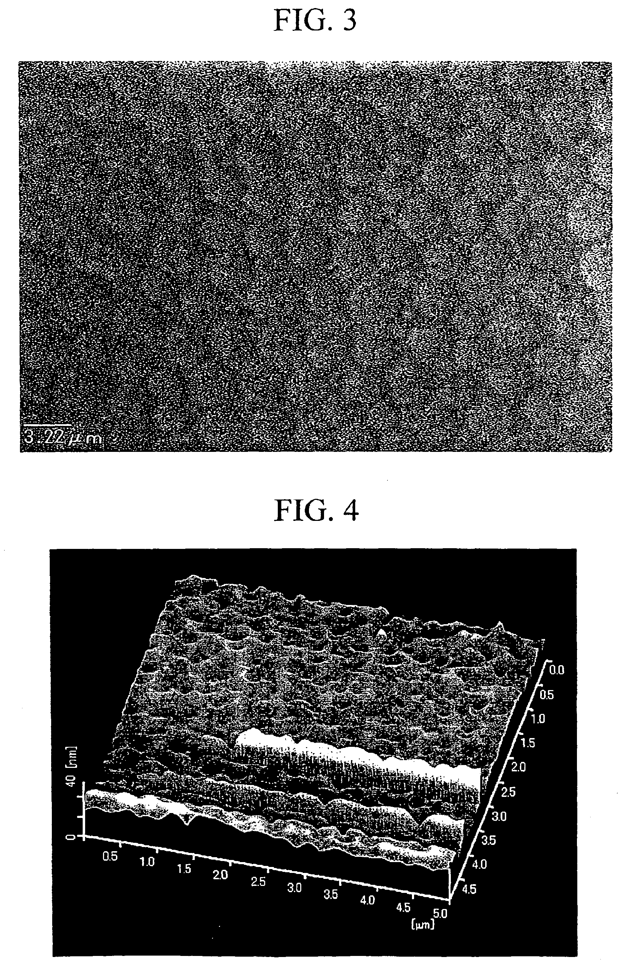

The resulting aqueous composition (2) was coated on a slide glass using a 3 mil applicator and then dried at 80°C for thirty minutes to obtain a colorless and transparent coating film (2) having a thickness of about 2 µm and high hardness. The surface of the resulting coating film (2) was analyzed by a scanning electron microscope. The result is shown in Fig. 3. On the surface of the coating film (2), a fine pore pattern having an average pore size of about 2.72 µm was confirmed.

### (Example 3)

### <Preparation of Aqueous Composition (3)>

0.05 g of the copolymer (X-3) obtained in Synthesis Example 3 was mixed with 0.12 g of polyvinyl alcohol and then dissolved in 1.7 ml of pure water. To the solution, 0.48 g of tetramethoxysilane was added while stirring. In an initial stage, tetramethoxysilane was dispersed in the form of an emulsion. After several minutes, a transparent homogeneous solution was obtained. This solution was allowed to stand for one hour to obtain an aqueous composition (3).

### <Formation of Coating Film (3)>

The resulting aqueous composition (3) was coated on a slide glass using a 3 mil applicator and then dried at 80°C for thirty minutes to obtain a colorless and transparent coating film (3) having a thickness of about 2 µm and high hardness. The surface of the resulting coating film (3) was analyzed by AFM. The result is shown in Fig. 4. On the surface of the coating film (3), a fine pore pattern having an average pore size of about 0.14 µm and an average depth of about 15 nm was confirmed.

### (Example 4)

### <Preparation of Aqueous Composition (4)>

0.74 g of the core-shell particle dispersion solution (X-4) obtained in Synthesis Example 4 was dissolved in 6.7 ml of pure water. To the solution, 2.42 g of a mixture of tetramethoxysilane and γ-glycidoxypropyltrimethoxysilane (tetramethoxysilane:γ-glycidoxypropyltrimethoxysilane = 4:1 (mass ratio)) was added while stirring. In an initial stage, the mixture was dispersed in the form of an emulsion. After several minutes, a transparent homogeneous solution was obtained. This solution was allowed to stand for one hour to obtain an aqueous composition (4).

### <Formation of Coating Film (4)>

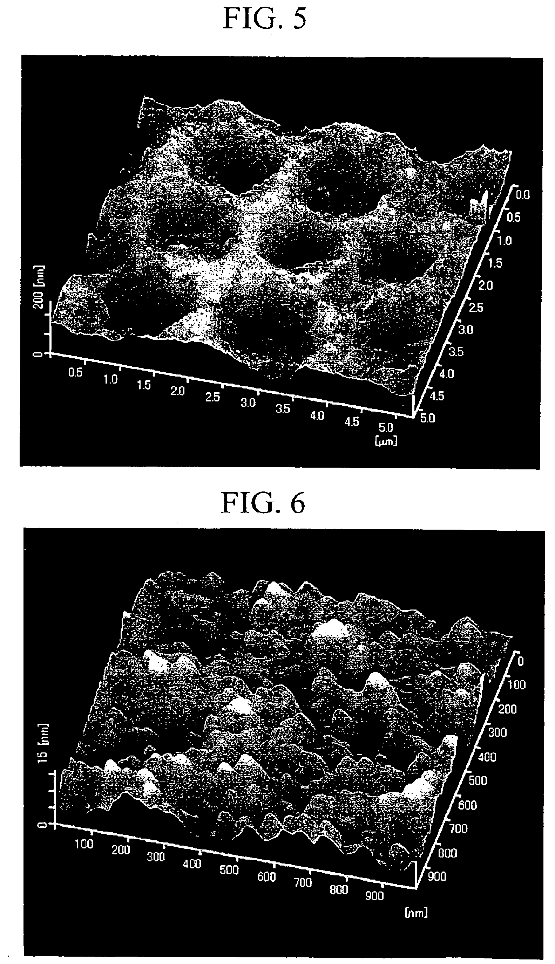

The resulting aqueous composition (4) was coated on a polycarbonate film having a thickness of 100 µm using a #16 bar coater and then dried at 80°C for thirty minutes to obtain a colorless and transparent coating film (4) having a thickness of about 2 µm and high hardness. The surface of the resulting coating film (4) was analyzed by AFM. The result is shown in Fig. 5. On the surface of the coating film (4), a fine pore pattern having an average pore size of about 1.28 µm and an average depth of about 150 nm was confirmed.

### (Comparative Example 1)

### <Preparation of Aqueous Composition>

0.01 g of polyethyleneimine (manufactured by Aldrich Co., number average molecular weight: 25000) and 0.4 g of polyvinyl alcohol were dissolved in 4.39 g of pure water and then an aqueous 2N hydrochloric acid solution was added, thereby adjusting the pH to 3. Then, 1.73 g of a mixture of tetramethoxysilane and 3-glycidoxypropyltrimethoxysilane in a mixing ratio of 7:3 was added. In an initial stage, the mixture was dispersed in the form of an emulsion. After several minutes, a transparent homogeneous solution was obtained. This solution was allowed to stand for one hour to obtain an aqueous composition.

### <Formation of Coating Film>

The resulting aqueous composition was coated on a slide glass using a 3 mil applicator and then dried at 80°C for thirty minutes to obtain a colorless and transparent coating film (H1) having a thickness of about 2 µm and high hardness. The surface of the resulting coating film (H1) was observed by AFM. As shown in Fig. 6, a patterned structure was not formed although the surface had roughness.

### (Comparative Example 2)

Using the intermediate polymer (1-2) having no polyamine block in Synthesis Example 2, a coating composition was prepared in the same manner as in Example 2. The resulting coating composition was coated in the same manner as in Example 6 to obtain a coating film (H2). The resulting coating film (H2) was observed by AFM. As a result, neither pores nor patterns were observed on the surface and the surface was entirely flat.

### INDUSTRIAL APPLICABILITY

The organic-inorganic composite coating film of the present invention has a fine pore pattern on the surface as well as properties such as high hardness, flame retardancy, and semiconductivity, and therefore can be effectively used in the field of various advanced materials, for example, devices wherein a electrically conductive metal line is constructed on the surface of a pattern, structural color materials, biosensors, fixation of biomolecules and catalysts, dye-sensitized solar batteries, luminescent materials due to optical interference, and construction of superhydrophobic or superhydrophilic coating film.

## Claims

1. An organic-inorganic composite coating film wherein
a copolymer having a polyamine segment within a range of 2 to 70% by mass in the copolymer is combined in a matrix composed of an inorganic oxide obtained by a sol-gel reaction,
the organic-inorganic composite coating film has a periodic structural pattern of fine pores which pore size is within a range of 20 nm to 5 µm on the surface, and
the content of the inorganic oxide in the organic-inorganic composite coating film is within a range of 60 to 90% by mass.

2. The organic-inorganic composite coating film according to claim 1, wherein the fine pore pattern has a close packing shape or a honeycomb shape.

3. The organic-inorganic composite coating film according to claim 1, wherein the inorganic oxide is a metal oxide of at least one kind of metal species selected from Si, Ti, Zr, Al, and Zn.

4. The organic-inorganic composite coating film according to claim 1, wherein the polyamine segment is at least one kind of a polymer segment selected from polyalkyleneimine, polyvinylamine, polyallylamine, polyvinylpyridine, polyaminoalkyl methacrylate, polyaminoalkyl acrylate, polyaminoalkyl acrylamide, polyaminoalkyl methacrylamide, and polyaminoalkyl styrene.

5. The organic-inorganic composite coating film according to claim 1, wherein the copolymer is a copolymer having a hydrophobic segment.

6. The organic-inorganic composite coating film according to claim 5, wherein the hydrophobic segment is at least one kind of a polymer segment selected from polystyrene, polyacrylate, polymethacrylate, and epoxy resin.

7. The organic-inorganic composite coating film according to claim 1, wherein the copolymer is a copolymer which forms an association in an aqueous medium.

8. The organic-inorganic composite coating film according to claim 1, which is formed by coating an aqueous sol-like coating composition prepared by mixing a copolymer having a polyamine segment, a metal alkoxide, and an aqueous medium on a base material, and by volatilizing a volatile component.

9. An aqueous coating composition which forms the organic-inorganic composite coating film according to claim 1, comprising:
a copolymer having a polyamine segment within a range of 2 to 70% by mass in the copolymer,
a metal alkoxide, and
an aqueous medium, wherein
an inorganic oxide is obtained by a sol-gel reaction, and
the content of the inorganic oxide in the organic-inorganic composite coating film obtained by coating and curing the aqueous coating composition is within a range of 60 to 90% by mass.

10. The aqueous coating composition according to claim 9, wherein the polyamine segment is at least one kind of a polyamine segment selected from polyalkyleneimine, polyvinylamine, polyallylamine, polyvinylpyridine, polyaminoalkyl methacrylate, polyaminoalkyl acrylate, polyaminoalkyl acrylamide, polyaminoalkyl methacrylamide, and polyaminoalkyl styrene.

11. The aqueous coating composition according to claim 9 or 10, wherein the copolymer is a copolymer having a hydrophobic segment.

12. The aqueous coating composition according to claim 11, wherein the hydrophobic segment is at least one kind of a polymer segment selected from polystyrene, polyacrylate, polymethacrylate, and epoxy resin.

13. The aqueous coating composition according to claim 9 or 10, wherein the copolymer is a copolymer which forms an association in an aqueous medium.

14. The aqueous coating composition according to claim 9 or 10, wherein the metal alkoxide is an alkoxysilane or an alkylalkoxysilane having a reactive group.

15. The aqueous coating composition according to claim 9 or 10, wherein the copolymer is a copolymer having a nonionic hydrophilic segment.

16. The organic-inorganic composite coating film according to claim 1, wherein the copolymer having a polyamine segment is a copolymer in which the polyamine segment is grafted to polymer particles.

## Patentansprüche

1. Organisch-anorganischer Verbundbeschichtungsfilm, in dem
ein Copolymer, das ein Polyaminsegment in einem Bereich von 2 bis 70 Massen% in dem Copolymer hat, mit einer Matrix kombiniert ist, welche aus einem anorganischen Oxid besteht, das durch eine Sol-Gel-Reaktion erhalten wurde,
wobei der organisch-anorganische Verbundbeschichtungsfilm ein periodisches Strukturmuster aus feinen Poren, deren Porengröße in einem Bereich von 20 nm bis 5 µm liegt, auf der Oberfläche hat und
der Gehalt des anorganischen Oxids in dem organischanorganischen Verbundbeschichtungsfilm in einem Bereich von 60 bis 90 Massen% liegt.

2. Organisch-anorganischer Verbundbeschichtungsfilm gemäß Anspruch 1, wobei das feine Porenmuster die Form einer dichten Packung oder eine Honigwabenform hat.

3. Organisch-anorganischer Verbundbeschichtungsfilm gemäß Anspruch 1, wobei das anorganische Oxid ein Metalloxid aus wenigstens einer Art von Metallspezies, ausgewählt aus Si, Ti, Zr, Al und Zn, ist.

4. Organisch-anorganischer Verbundbeschichtungsfilm gemäß Anspruch 1, wobei das Polyaminsegment wenigstens eine Art eines Polymersegments ist, die ausgewählt ist aus Polyalkylenimin, Polyvinylamin, Polyallylamin, Polyvinylpyridin, Polyaminoalkylmethacrylat, Polyaminoalkylacrylat, Polyaminoalkylacrylamid, Polyaminoalkylmethacrylamid und Polyaminoalkylstyrol.

5. Organisch-anorganischer Verbundbeschichtungsfilm gemäß Anspruch 1, wobei das Copolymer ein Copolymer ist, das ein hydrophobes Segment hat.

6. Organisch-anorganischer Verbundbeschichtungsfilm gemäß Anspruch 5, wobei das hydrophobe Segment wenigstens eine Art eines Polymersegments, ausgewählt aus Polystyrol, Polyacrylat, Polymethacrylat und Epoxyharz, ist.

7. Organisch-anorganischer Verbundbeschichtungsfilm gemäß Anspruch 1, wobei das Copolymer ein Copolymer ist, das in einem wässrigen Medium eine Assoziierung bildet.

8. Organisch-anorganischer Verbundbeschichtungsfilm gemäß Anspruch 1, der gebildet wird, indem eine wässrige solartige Beschichtungszusammensetzung, die durch Vermischen eines Copolymers mit einem Polyaminsegment, eines Metallalkoxids und eines wässrigen Mediums hergestellt wurde, auf ein Basismaterial aufgetragen wird und eine flüchtige Komponente verflüchtigt wird.

9. Wässrige Beschichtungszusammensetzung, die den organischanorganischen Verbundbeschichtungsfilm gemäß Anspruch 1 bildet, umfassend:
ein Copolymer, das ein Polyaminsegment in einem Bereich von 2 bis 70 Massen% in dem Copolymer hat,
ein Metallalkoxid und
ein wässriges Medium, wobei
ein anorganisches Oxid durch Sol-Gel-Reaktion erhalten wird, und
der Gehalt des anorganischen Oxids in dem organischanorganischen Verbundbeschichtungsfilm, der durch Auftragen und Härten der wässrigen Beschichtungszusammensetzung erhalten wird, in einem Bereich von 60 bis 90 Massen% ist.

10. Wässrige Beschichtungszusammensetzung gemäß Anspruch 9, wobei das Polyaminsegment wenigstens eine Art eines Polyaminsegments, ausgewählt aus Polyalkylenimin, Polyvinylamin, Polyallylamin, Polyvinylpyridin, Polyaminoalkylmethacrylat, Polyaminoalkylacrylat, Polyaminoacrylamid, Polyaminomethacrylamid und Polyaminoalkylstyrol, ist.

11. Wässrige Beschichtungszusammensetzung gemäß Anspruch 9 oder 10, wobei das Copolymer ein Copolymer ist, das ein hydrophobes Segment hat.

12. Wässrige Beschichtungszusammensetzung gemäß Anspruch 11, wobei das hydrophobe Segment wenigstens eine Art eines Polymersegments, ausgewählt aus Polystyrol, Polyacrylat, Polymethacrylat und Epoxyharz, ist.

13. Wässrige Beschichtungszusammensetzung gemäß Anspruch 9 oder 10, wobei das Copolymer ein Copolymer ist, das in einem wässrigen Medium eine Assoziierung bildet.

14. Wässrige Beschichtungszusammensetzung gemäß Anspruch 9 oder 10, wobei das Metallalkoxid ein Alkoxysilan oder ein Alkylalkoxysilan, das eine reaktive Gruppe hat, ist.

15. Wässrige Beschichtungszusammensetzung gemäß Anspruch 9 oder 10, wobei das Copolymer ein Copolymer ist, das ein nicht-ionisches hydrophiles Segment hat.

16. Organisch-anorganischer Verbundbeschichtungsfilm gemäß Anspruch 1, wobei das Copolymer, das ein Polyaminsegment hat, ein Copolymer ist, in dem das Polyaminsegment auf Polymerpartikel gepfropft ist.

## Revendications

1. Film de revêtement composite organique-inorganique, dans lequel un copolymère ayant un segment de polyamine dans la gamme de 2 à 70% en masse dans le copolymère est combiné dans une matrice composée d'un oxyde inorganique obtenu par une réaction sol-gel,
le film de revêtement composite organique-inorganique ayant un motif structurel périodique de pores fins sur la surface, la taille des pores étant dans la gamme de 20nm à 5µm, et
la teneur en oxyde inorganique dans le film de revêtement composite organique-inorganique étant dans la gamme de 60 à 90% en masse.

2. Film de revêtement composite organique-inorganique selon la revendication 1, dans lequel le motif de pores fins a la forme d'un empilement compact ou d'un rayon de miel.

3. Film de revêtement composite organique-inorganique selon la revendication 1, dans lequel l'oxyde inorganique est un oxyde métallique d'au moins un type des espèces métalliques choisi parmi Si, Ti, Zr, Al et Zn.

4. Film de revêtement composite organique-inorganique selon la revendication 1, dans lequel le segment de polyamine est au moins un type d'un segment de polymère choisi parmi polyalkylèneimine, polyvinylamine, polyallylamine, polyvinylpyridine, polyaminoalkyle, méthacrylate, polyaminoalkyle acrylate, polyaminoalkyle arylamide, polyaminoalkyle méthacrylamide et polyaminoalkyle styrène.

5. Film de revêtement composite organique-inorganique selon la revendication 1, dans lequel le copolymère est un copolymère ayant un segment hydrophobe.

6. Film de revêtement composite organique-inorganique selon la revendication 5, dans lequel le segment hydrophobe est au moins d'un type de segment de polymère choisi parmi polystyrène, polyacrylate, polyméthacrylate et résine époxyde.

7. Film de revêtement composite organique-inorganique selon la revendication 1, dans lequel le copolymère est un copolymère qui forme une association dans un milieu aqueux.

8. Film de revêtement composite organique-inorganique selon la revendication 1, qui est formé en appliquant sur un matériau de base une composition de revêtement aqueuse de type sol obtenu par mélange d'un copolymère ayant un segment de polyamine, un alcoxyde de métal et un milieu aqueux, et en volatilisant un constituant volatil.

9. Composition de revêtement aqueuse qui forme le film de revêtement composite organique-inorganique selon la revendication 1, comprenant :
un copolymère ayant un segment de polyamine dans la gamme de 2 à 70% en masse dans le copolymère,
un alcoxyde de métal, et
un milieu aqueux,
l'oxyde inorganique étant obtenu par une réaction sol-gel, et
la teneur en oxyde inorganique, obtenu par application et durcissement de la composition de revêtement aqueuse, étant comprise dans la gamme de 60 à 90% en masse.

10. Composition de revêtement aqueuse selon la revendication 9, dans laquelle le segment de polyamine est au moins un type d'un segment de polymère choisi parmi polyalkylèneimine, polyvinylamine, polyallylamine, polyvinylpyridine, polyaminoalkyle, méthacrylate, polyaminoalkyle acrylate, polyaminoalkyle arylamide, polyaminoalkyle méthacrylamide et polyaminoalkyle styrène.

11. Composition de revêtement aqueuse selon la revendication 9 ou 10, dans laquelle le polymère est un copolymère ayant un segment hydrophobe.

12. Composition de revêtement aqueuse selon la revendication 11, dans laquelle le segment hydrophobe est au moins d'un type de segment de polymère choisi parmi polystyrène, polyacrylate, polyméthacrylate et résine époxyde.

13. Composition de revêtement aqueuse selon la revendication 9 ou 10, dans laquelle le copolymère est un copolymère qui forme une association dans un milieu aqueux.

14. Composition de revêtement aqueuse selon la revendication 9 ou 10, dans laquelle l'alcoxyde de métal est un alcoxy silane ou un alcoxyalcoxy silane ayant un groupe réactif.

15. Composition de revêtement aqueuse selon la revendication 9 ou 10, dans laquelle le copolymère est un copolymère ayant un segment hydrophile non ionique.

16. Film de revêtement composite organique-inorganique selon la revendication 1, dans lequel le copolymère ayant un segment de polyamine est un copolymère, dans lequel le segment de polyamine est greffé sur des particules de polymère.
